# FASCICULE DE BREVET EUROPEEN

(11) **EP 3 045 804 B1**
(45) Date de publication et mention de la délivrance du brevet: **26.06.2019**
(21) Numéro de dépôt: 16151131.6
(22) Date de dépôt: 13.01.2016
(51) Int. Cl.: F21V 8/00, B60Q 1/26, F21S 8/10

(54) **DISPOSITIF LUMINEUX DE VÉHICULE AUTOMOBILE COMPRENANT UN GUIDE DE LUMIÈRE AVEC UNE PARTIE COURBÉE VERS L'ARRIÈRE**
KRAFTFAHRZEUGLEUCHTVORRICHTUNG MIT LICHTWELLENLEITER MIT EINEM NACH HINTEN GEKRÜMMTEN TEIL
LUMINOUS DEVICE FOR AUTOMOBILE VEHICLE COMPRISING A LIGHT GUIDE WITH A PORTION BENT TOWARDS THE REAR

(30) Priorité: 15.01.2015 FR 1550298
(43) Date de publication de la demande: 20.07.2016
(73) Titulaire: VALEO ILUMINACION, 23600 Martos (ES)
(72) Inventeur: FUENTES, Manuel, 23600 MARTOS (ES); MARTINEZ, Juan Manuel, 18014 GRANADA (ES); DEL CARMEN MONTANO, Maria, 23600 MARTOS (ES)

(56) Documents cités:
- DE-A1-102004 047 653
- DE-A1-102005 010 117
- JP-A- 2014 099 324
- KR-A- 20100 043 510
- US-A- 5 984 497
- US-A1- 2012 114 284

## Description

La présente invention se rapporte au domaine des dispositifs lumineux de véhicule automobile comprenant un guide de lumière ayant une partie principale et une partie secondaire.

Le document US 2012/114284 décrit un guide de lumière comprenant un bras d'entée, un ou plusieurs bras de sorties et un coude en forme d'escalier connectant le bras d'entrée au bras de sortie.

Le document US 55 984 497 décrit un dispositif lumineux de véhicule composé d'un premier guide de lumière et d'un guide de lumière supplémentaire associés à une unique source.

Le document DE 10 2004 047653 décrit un dispositif lumineux de véhicule avec un guide de lumière circulaire joint à un guide de lumière principal.

Le document JP2012190761 divulgue un dispositif lumineux de véhicule, dans lequel un guide intermédiaire transmet un flux lumineux selon sa longueur. Il comprend également des prismes pour rediriger certains rayons de ce flux à l'intérieur de guides terminaux qui lui sont reliés perpendiculairement.

Cependant, ce type de connexion entre guides génère des pertes de rayons au niveau de la jonction entre les guides. Il s'ensuit que ces rayons peuvent devenir des rayons parasites altérant la photométrie du faisceau lumineux émis par le dispositif lumineux de véhicule, lorsque ces rayons sortent par la glace de fermeture transparente de ce dispositif. Quand bien même ces rayons ne sortiraient pas, ils vont impacter un masque, ou selon le modèle une partie apparente du boitier du dispositif lumineux de véhicule, et créer un point lumineux disgracieux.

Le problème technique que vise à résoudre l'invention est donc d'améliorer le guidage de rayons lumineux dans un système où une première partie de guidage de la lumière transmet une partie de rayons lumineux dans une autre partie de guidage de la lumière qui lui est reliée.

A cet effet, un premier objet de l'invention est un dispositif lumineux de véhicule automobile, comprenant un guide de lumière comme défini dans la revendication 1.

L'invention offre ainsi la possibilité d'exploiter des rayons lumineux renvoyés vers l'arrière.

Avantageusement, la partie secondaire de guidage s'étend du côté de la portion amont à partir et dès la zone de jonction.

Selon l'invention, la partie principale de guidage et la partie secondaire de guidage sont agencées de manière à ce qu'une deuxième partie des rayons lumineux traversant le dioptre d'entrée soient réfléchis à l'intérieur de ladite partie secondaire de guidage.

Selon un autre aspect de l'invention, la partie secondaire de guidage est venue de matière en une seule pièce avec la partie principale de guidage.

L'agencement particulier de la partie secondaire de guidage, à savoir que celle-ci s'oriente vers l'arrière dès le moment où elle se distingue de la partie principale de guidage de la lumière, permet de minimiser la fuite de rayons lumineux au niveau de la jonction des deux parties de guidage. En effet, par cet agencement, vu depuis l'intérieur des parties de guidage, l'angle formé par la paroi interne de la partie principale de guidage et la partie secondaire de guidage et se situant en avant de la zone de jonction, est un angle inférieur à 270°, notamment compris entre 200° et 250°, par exemple 210°, 220°, 230° ou 240°. De ce fait, comparé à un angle supérieur à cette valeur, on évite d'avoir une pointe vu depuis l'intérieur du guide et tournée en face de la direction de propagation des rayons lumineux dans la partie principale de guidage. Il a été en effet observé que dans un tel cas (avec une pointe), beaucoup plus de rayons parasites s'échapperaient du guide de lumière. En revanche, selon l'invention, moins de rayons sont perdus lorsqu'ils sont redirigés dans la partie secondaire de guidage.

Les termes « amont » et « aval » dans la présente demande se réfèrent au sens de cheminement, le long d'une partie de guidage de lumière, des rayons provenant de la source de lumière.

Les termes « avant » et « arrière » se réfèrent au sens d'émission de lumière depuis le dioptre d'entrée de la partie principale de guidage jusqu'à son dioptre de sortie principal. Le dioptre de sortie est qualifié de principal en ce qu'il existe un dioptre de sortie secondaire formé par la partie secondaire de guidage. Selon un exemple de réalisation, la tangente de la paroi interne de la partie secondaire de guidage et celle de la partie principale de guidage, à la zone de jonction de ces deux parties de guidage et à l'avant de la zone de jonction, forme un angle inférieur à 250°, notamment compris entre 200° et 250°, par exemple 210°, 220°, 230° ou 240°. On diminue davantage la perte de rayons lumineux lors de la transmission vers la partie secondaire.

L'invention peut optionnellement présenter une ou plusieurs des caractéristiques suivantes :
- la partie secondaire de guidage présente une première extrémité située à ladite zone de jonction et une deuxième extrémité à distance de la première extrémité, la partie secondaire de guidage s'étendant vers l'arrière du guide, soit dès la zone de jonction et jusqu'à la deuxième extrémité, soit dès la zone de jonction et jusqu'à une zone située entre la première extrémité et la deuxième extrémité ; la partie secondaire de guidage permet donc de guider une partie des rayons lumineux vers l'arrière alors qu'ils étaient en entrant dans le guide via le dioptre d'entrée propagés vers l'avant, tout en diminuant le risque de rayons parasites ;
- la portion de réflexion forme un rétrécissement de la partie principale de guidage de sorte qu'elle intercepte une partie des rayons lumineux provenant du dioptre d'entrée ; ce mode permet de réaliser simplement la portion de réflexion ;
- la partie principale de guidage comprend :
   o une portion amont s'étendant du dioptre d'entrée à ladite portion de réflexion,
   o une portion aval, s'étendant de la portion de réflexion vers le dioptre de sortie principal, la portion aval présentant une épaisseur inférieure à celle de la portion amont ;
cela permet de réaliser plus facilement le rétrécissement ;
- l'arrière de la partie secondaire de guidage se joint à ladite portion amont en formant un angle aigüe, vu depuis l'extérieur du guide de lumière, et de manière complémentaire, l'avant de la partie secondaire de guidage se joint à ladite portion aval en formant une courbe dont la corde forme un angle obtus avec ladite portion aval, vu depuis l'extérieur du guide de lumière ;
- la portion de réflexion est formée par un pan incliné par rapport à la direction d'extension de la partie principale de guidage ;
- ladite portion de réflexion est en vis-à-vis de ladite zone de jonction ;
- ladite partie secondaire de guidage est courbée et est, vu de l'extérieur du guide, concave à l'avant et par exemple convexe à l'arrière ;
- ladite partie secondaire de guidage comprend des moyens de découplage répartis le long de cette partie secondaire de découplage de manière à ce que des rayons s'échappent le long de celle-ci ; cela permet d'étendre la surface d'où sortent les rayons lumineux, permettant d'agrandir la surface éclairante et/ou de générer un halo lumineux ;
- les portions aval et amont de la partie principale de guidage et/ou la partie secondaire de guidage sont en formes de plaques, notamment planes ou courbées ;
- les portions aval et amont de la partie principale de guidage et/ou la partie secondaire de guidage sont en formes de tiges, notamment rectilignes ou courbées.

L'invention a également pour objet un dispositif lumineux de véhicule comprenant un guide de lumière selon l'invention. Ce dispositif lumineux peut par exemple être un dispositif d'éclairage de la route, notamment un projecteur, ou encore un dispositif de signalisation, notamment un feu arrière.

Le dispositif lumineux de véhicule selon l'invention peut optionnellement présenter une ou plusieurs des caractéristiques suivantes :
- le dispositif lumineux de véhicule comprend également ladite source de lumière, notamment une diode lumineuse électroluminescent, ladite source de lumière étant agencée de manière à émettre des rayons lumineux au travers dudit dioptre d'entrée ;
- la première partie des rayons de lumière forme en sortant du dioptre principal de sortie une partie ou la totalité d'une fonction de signalisation et/ou d'éclairage de la route, notamment d'un feu stop, d'un indicateur de direction et/ou d'un feu de recul ;
- le dispositif lumineux de véhicule comprend une enveloppe formée par un boîtier et par une glace de fermeture du boîtier, ladite partie secondaire de guidage comprenant des moyens de découplage répartis le long de cette partie secondaire de découplage de manière à ce que des rayons s'échappent le long de celle-ci, ces rayons formant un halo d'illumination de l'intérieur de ladite enveloppe ; cela permet de conférer une signature de nuit permettant de voir les composants optiques et le ou les masques du dispositif lumineux de véhicule de nuit ; cela est particulièrement intéressant dans des réalisations selon lesquelles le dispositif lumineux de véhicule est un dispositif de signalisation, tel qu'un feu arrière, ou un dispositif d'éclairage de la route, tel qu'un projecteur ;
- le dispositif lumineux de véhicule comprend un masque recouvrant une partie de la partie principale de guidage et dans lequel ladite portion de réflexion est agencée de manière à ce que sa surface externe forme une butée sur laquelle ledit masque est positionné ; on minimise ainsi le nombre de portions particulières à mouler, ce qui permet de simplifier le moulage des pièces, notamment du guide de lumière selon l'invention, mais également le nombre de positionnements à réaliser lors de l'assemblage du dispositif lumineux de véhicule ;
- le masque est un manchon dans lequel la partie principale de guidage est emmanchée ; le guide sert ainsi également de positionnement précis au masque ; selon un exemple de réalisation, le masque comprend une forme complémentaire en contact avec la surface externe de la portion de réflexion ; on réalise ainsi simplement le positionnement du masque lorsqu'il est emmanché ;
- le dispositif lumineux de véhicule est un feu de signalisation, notamment un feu arrière de véhicule, un dispositif d'éclairage de la route, notamment un projecteur, ou encore un dispositif d'éclairage de l'intérieur de l'habitacle d'un véhicule, notamment un plafonnier ou une applique.

Un autre objet de l'invention est un véhicule comprenant un guide de lumière et/ou un dispositif lumineux selon l'invention.

D'autres caractéristiques et avantages de l'invention apparaîtront à la lecture de la description détaillée des exemples non limitatifs qui suivent, pour la compréhension de laquelle on se reportera aux dessins annexés, parmi lesquels :
- La figure 1 représente un guide de lumière selon un premier mode de réalisation de l'invention, vu en perspective.
- La figure 2 représente un guide de lumière selon un deuxième mode de réalisation de l'invention, vu en perspective.
- La figure 3 représente une section longitudinale des guides de lumière des figures 1 ou 2.
- La figure 4 représente un détail de la figure 5 et également un agencement d'un guide de lumière selon l'invention dans le dispositif lumineux de véhicule selon l'invention.
- La figure 5 représente un dispositif lumineux de véhicule selon l'invention.

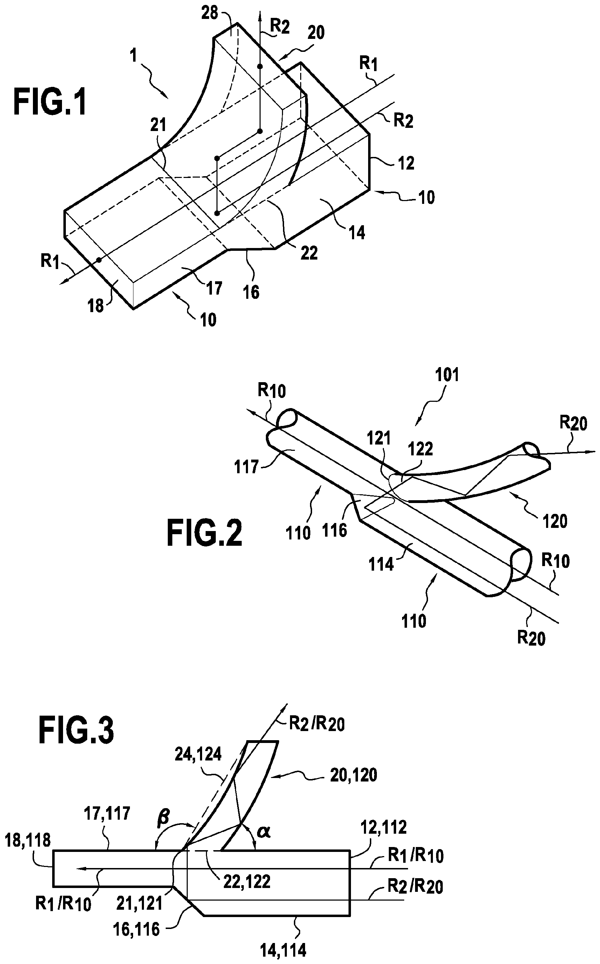

Les figures 1 et 2 illustrent chacune un guide de lumière 1, 101, selon un mode de réalisation de l'invention. Chacun de ces guides comprend une partie principale de guidage de lumière 10, 110 et une partie secondaire de guidage de lumière 20, 120 se joignant en une zone de jonction 22, 122. La forme des sections de ces guides de lumière selon un axe longitudinal allant de leur dioptre d'entrée 12, 112, à leur dioptre de sortie principal 18, 118, est similaire, et est illustrée en figure 3. La section du guide de lumière selon l'invention peut être carré ou rectangulaire comme illustrée sur la figure 1. Alternativement, cette section peut être ovoïde ou circulaire comme montrée sur la figure 2.

Le guide de lumière de la figure 1 est un guide de lumière formé de plaques, à savoir que sa partie principale de guidage 10 comprend des portions amont 14 et aval 17 planes. Ces portions amont 14 et aval 17 de la partie principale de guidage de lumière 10 comprennent chacune deux faces étendues jointes entre elles et délimitées par une tranche périphérique. Ces faces étendues peuvent permettre la propagation de la lumière dans cette partie principale 10, par exemple par réflexion interne, depuis le dioptre d'entrée 12 jusqu'au dioptre de sortie principal 18. Ces faces étendues peuvent être planes, comme illustré sur la figure 1. La section de ces portions selon un plan perpendiculaire à la direction globale d'émission du faisceau lumineux par le guide de lumière, est globalement rectangulaire. De même, la partie secondaire de guidage 20 est en forme de plaque, notamment cintrée.

Le guide de lumière 101 de la figure 2 est un guide de lumière formé de tiges, à savoir que sa partie principale de guidage 110 comprend des portions amont 114 et aval 117, en formes de tiges. Ces portions amont 114 et aval 117 peuvent permettre la propagation de la lumière dans cette partie principale de guidage 110, par exemple par réflexion interne, depuis le dioptre d'entrée 112 jusqu'au dioptre de sortie principal 118. La section de ces portions selon un plan perpendiculaire à la direction globale d'émission du faisceau lumineux par le guide de lumière, peut par exemple être globalement circulaire ou oblongue. De même, la partie secondaire de guidage 120 est en forme de tige, notamment courbée.

Dans ces deux modes de réalisation illustrés en figures 1 et 2, les guides de lumière 1 et 101 selon l'invention sont destinés à recevoir des rayons lumineux R₁, R₂ et R₁₀, R₂₀ d'une source de lumière. Ces rayons R₁, R₂ et R₁₀, R₂₀ traversent d'abord un dioptre d'entrée 12, 112, de la partie principale de guidage 10, 110, et se propagent ensuite à l'intérieur de la portion amont 14, 114, de la partie principale de guidage 10, 110. Cette portion amont s'étend depuis le dioptre d'entrée 12, 112, jusqu'à une portion de réflexion 16, 116, et jusqu'à la zone de jonction 22, 122 des deux parties de guidage 10, 110 et 20, 120.

Dans l'alignement de cette portion amont 14, 114, la partie principale de guidage 10, 110 se prolonge en aval de la portion de réflexion 16, 116 par la portion aval 17, 117. Cette dernière se termine par le dioptre de sortie principal 18, 118.

La portion de réflexion 16, 116, est formée par un pan incliné formant un rétrécissement de la partie principale de guidage 10, 110. Ainsi, comme on peut le voir en figure 3, l'épaisseur de la portion aval 17, 117 est inférieure à celle de la portion amont 14, 114.

Ce rétrécissement est un exemple de réalisation permettant d'intercepter une deuxième partie de rayons R₂, R₂₀, la première partie de rayons R₁, R₁₀, étant celle qui n'est pas interceptée.

Ainsi, la première partie de rayons R₁ va passer dans la partie principale de guidage 10, 110, à côté de cette portion de réflexion 16, 116, et se propager dans la portion aval 17, 117, jusqu'au dioptre de sortie principal 18, 118.

Le guide de lumière 1, 101 est par exemple agencé pour que ces rayons lumineux R₁, R₁₀, soient la majorité des rayons R₁ et R₂, R₁₀ et R₂₀, reçus par le dioptre d'entrée 12, 112, de sorte que le guide de lumière 1, 101 puisse être intégré dans un dispositif lumineux de véhicule pour réaliser, seul ou en partie, un faisceau lumineux de signalisation ou d'éclairage de la route.

En revanche, la deuxième partie de rayons R₂, R₂₀, va rencontrer la portion de réflexion 16, 116 formée par le rétrécissement et être réfléchie par celle-ci. La portion de réflexion est agencée de manière à renvoyer ces rayons R₂, R₂₀, vers la zone de jonction 22, 122 des deux parties de guidage. Ils vont donc ensuite entrer dans la partie secondaire de guidage 20, 120. Cette portion de réflexion 16, 116 et la partie secondaire de guidage sont notamment agencées de manière à ce que cette deuxième partie de rayons R₂, R₁₂₀, se propage ensuite le long de la partie secondaire de guidage 20, 120.

A noter qu'au niveau de la zone de jonction 22, 122, et en aval de celle-ci, les surfaces de la partie principale de guidage 10, 110 et de la partie secondaire de guidage 20, 120, se joignent selon une arrête aval 21, 121. Les rayons impactant cette arête aval et la zone immédiatement autour risquent de présenter un angle d'incidence tel qu'ils sortent du guide de lumière 1, 101.

Pour diminuer ce risque, la présente invention comprend un agencement particulier du guide de lumière 1, 101. Comme on peut l'observer sur les figures 1 à 3, la partie secondaire de guidage 20, 120, s'étend à partir de la zone de jonction 22, 122, de suite vers l'arrière. Ainsi, l'extension de la partie secondaire de guidage 20, 120 à partir de la partie principale de guidage 10, 110, débute dès cette zone de jonction 22, 122, en ayant dès ce début une orientation vers l'arrière, c'est-à-dire en se superposant selon un axe vertical avec la partie principale de guidage 10, 110.

Ainsi, lorsqu'observé depuis l'extérieur du guide 1, 101, et depuis l'arrière de celui-ci, la partie secondaire de guidage 20, 120, forme avec la portion amont 14, 114 de la partie principale de guidage 10, 110, un angle α aiguë (c'est-à-dire inférieur à 90°).

En revanche, lorsqu'observé depuis l'extérieur du guide 1, 101, et depuis l'avant de celui-ci, la partie secondaire de guidage 20, 120, forme avec la portion aval 17, 117 de la partie principale de guidage 10, 110, un angle obtus (c'est à dire supérieur à 90°). Par exemple, lorsque la partie secondaire de guidage 20, 120 est courbée, comme dans ces exemples, elle forme une courbe dont la corde 24, 124 forme un angle obtus β avec ladite portion aval 17, 117, vu depuis l'extérieur du guide.

On diminue ainsi le risque de fuite de certains rayons lumineux et permet d'augmenter les chances de les réorienter dans la partie secondaire de guidage 20, 120.

Cela permet également que certains rayons R₁, R₁₀, passant à côté de la portion de réflexion 16, 116, et qui impacteraient la zone au niveau de l'arrête aval 21, 121, d'être moins sujets à sortir du guide de lumière 1, 101, et de continuer à se propager dans la partie principale de guidage 10, 110, le long de la portion aval 17, 117.

L'invention permet donc d'avoir un guide de lumière avec deux branches, dans lequel les fuites de rayons lumineux au niveau de la séparation du guide en deux branches sont diminuées.

De plus, cet agencement permet de réaliser un retour en arrière des rayons lumineux avec le même guide de lumière, et sans découplage (c'est à dire sans sortie) des rayons de celui-ci.

A noter que la partie secondaire de guidage 20, 120, peut être agencée de manière à utiliser de différentes manières les rayons R₂, R₂₀, qu'elle guide. Par exemple, elle peut être agencée pour que tout ou partie de ces rayons R₂, R₂₀ se propagent jusqu'à l'extrémité 28 de la partie secondaire de guidage, à l'opposé de la zone de jonction 22, 122, et en sortent, notamment pour participer à une fonction de signalisation et/ou d'éclairage de la route. Elle peut alternativement ou cumulativement comprendre des moyens de découplage situés sur ses surfaces arrière et/ou avant, ces moyens de découplage étant agencés de manière à permettre aux rayons les impactant de sortir du guide. Lorsque ces moyens de découplage sont répartis le long de la partie secondaire de guidage 20, 120, ils permettent aux rayons de sortir sur toute ou partie de l'étendue de ses surfaces arrière et/ou avant de la partie secondaire de guidage 20, 120.

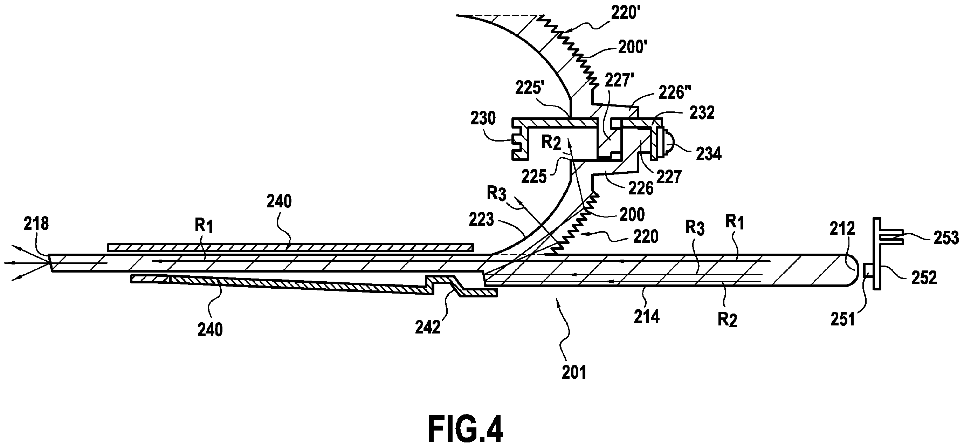

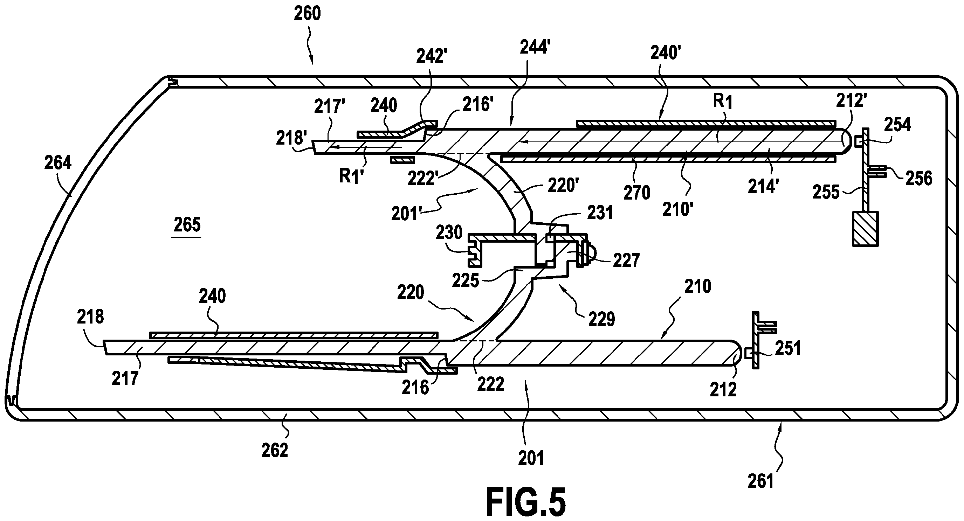

Les figures 4 et 5 illustrent une mise en oeuvre d'un premier guide de lumière 201 selon l'invention, dans un dispositif lumineux de véhicule 260 selon l'invention.

Ce dispositif lumineux 260 comprend un boitier 262 et une glace de fermeture 264, qui ferme une ouverture avant du boîtier 262. Le boitier 262 et la glace de fermeture 264 délimitent ainsi une enveloppe 261 du dispositif lumineux 260. Cette glace de fermeture 264 est en matériau transparent et peut être en polymère ou en verre.

Le premier guide de lumière 201 selon l'invention est placé à l'intérieur de cette enveloppe 261. Il est supporté dans ce boitier 262 par un support. Ce support peut être de différentes natures. Dans l'exemple illustré, ce support est un deuxième guide de lumière 201'. En particulier mais de manière non limitative, ce deuxième guide de lumière 201' est également un guide de lumière selon la présente invention. Ainsi le premier et le deuxième guide de lumière, 201 et 201', peuvent présenter les mêmes caractéristiques que celles décrites pour le guide de lumière 1 des figures 1 à 3. Le premier guide de lumière 201 et le deuxième guide de lumière sont globalement symétriques (à l'exception de leur zone de fixation) par rapport à un plan horizontal passant pas les zones de fixation.

Comme illustré en figure 4, selon un exemple de réalisation de l'invention, le premier guide de lumière 201 comprend une patte de fixation formée par la partie secondaire de guidage 220 de lumière. En d'autres termes, le premier guide de lumière 201 présente une patte de fixation à l'intérieur de laquelle se propagent des rayons lumineux R₂ et R₃, et qui est donc également une partie de guidage de lumière.

La partie de guidage secondaire 220, et donc la patte de fixation du premier guide de lumière 201, comprend une portion de fixation 229 comprenant un moyen de fixation, formé dans cet exemple par un premier fût 227 dans lequel s'emboite un tenon 227' de forme complémentaire. Ce tenon 227' provient du support du guide de lumière 201 dans le boitier, c'est à dire du deuxième guide de lumière 201'.

Le tenon 227' est également en forme de fût et présente un trou central, notamment borgne, aligné avec le trou traversant du premier fût 227. Une vis 234 passe au travers du premier fût 227 et se visse dans le tenon 227'.

De ce fait, la patte de fixation/partie secondaire de guidage 220, et donc le premier guide de lumière 201, est fixée dans le dispositif lumineux 260.

De plus, tel qu'illustré, le deuxième de guide de lumière 201', sert de support au premier guide de lumière 201.

La partie secondaire de guidage de ce premier guide de lumière 201 peut présenter une portion de découplage de la lumière. On comprend ici que le terme découplage indique que les rayons R₂ et R₃ sortent de la partie secondaire par la face avant 223 de celle-ci.

Telle qu'illustrée en figure 4, la portion de découplage est située entre la portion de fixation 229 et la zone de jonction 222. Elle comprend, sur la face arrière de la partie secondaire du guide de lumière, des moyens de découplage, formés par des prismes 200. Les rayons R₂, R₃ interceptés et réfléchis, comme décrit précédemment par la portion de réflexion 216, vont se propager dans cette portion de découplage. Cependant au fur et à mesure de leur progression, certains de ces rayons R₃ rencontreront des faces des prismes 200 agencées pour les renvoyer vers la face avant 223 de la portion de découplage, avec un angle tel qu'ils sortiront de la partie secondaire de guidage 220 au travers de cette face avant 223.

Ces prismes 200 sont répartis le long ou sur l'étendue de la portion de découplage de la partie secondaire de guidage 220, par exemple sur l'étendue la face arrière de la portion de découplage de la partie secondaire de guidage 220, ces prismes réfléchissant dans ce cas les rayons vers la face avant 223. Ainsi la face avant 223 de cette portion de découplage va rayonner sur toute sa longueur, ou sur toute l'étendue de cette face avant 223, et générer de ce fait un halo lumineux, formant ainsi une ambiance lumineuse dans le dispositif lumineux.

Cette face avant 223 de la portion de découplage est concave vue de l'extérieur, sa concavité étant tournée vers la glace de fermeture 264. Cela va permettre de générer un halo lumineux dans l'espace avant 265 du dispositif lumineux 260, situé entre la portion de découplage et la glace de fermeture 264. Cela va ainsi créer une illumination diffuse des éléments optiques et de masques 240, 240', en avant de cette portion de découplage.

Ces éléments optiques et ces masques sont visibles de jour au travers de la glace de fermeture. Selon les réalisations incluant les portions de découplage, comme l'exemple illustré, ils vont être également visibles de nuit. Leurs formes pourront donc être également utilisées pour une signature de nuit illustrant la marque du véhicule équipé du dispositif lumineux.

Le deuxième guide de lumière 201' étant également un guide selon l'invention, il présente une partie principale de guidage 210' d'où s'étend une partie secondaire de guidage 220'. Ces deux parties de guidage se joignent au niveau d'une zone de jonction 222'. En vis-à-vis de cette dernière, comme pour les guides de lumière 1, 101 et 201, décrits précédemment, est agencé un pan incliné 216', pour renvoyer dans la partie secondaire de guidage 220' une partie de l'ensemble des rayons R_{1'} arrivant depuis le dioptre d'entrée 212' du deuxième guide de lumière 201'. Cette partie secondaire de guidage 220' comprend également sur sa face arrière des moyens de découplage 200', répartis le long d'une portion de découplage compris entre le tenon 227' et la zone de jonction 222' du deuxième guide de lumière 201'.

Cette portion de découplage de la partie secondaire de guidage 220' du deuxième guide de lumière 201' a également une forme concave tournée vers la glace de fermeture 264 et génère également un halo lumineux du même type que celui généré par le premier guide de lumière 201.

Dans cet exemple de réalisation, le premier guide de lumière 201 est situé en dessous du deuxième guide de lumière 201', selon un axe vertical. Les partie secondaires de guidage 220 et 220' partent depuis les zones de jonctions correspondantes 222, 222' vers l'arrière, en se recourbant vers le haut, pour le premier guide de lumière 201, et vers l'arrière, en se recourbant vers le bas, pour le deuxième guide de lumière 201'. Cela va permettre de générer respectivement un halo lumineux vers le haut et vers l'avant et un halo lumineux vers le bas et vers l'avant. De façon globale, l'intégralité de l'espace avant 265 sera illuminée. Il est même possible de placer des éléments, tels que des masques, ou encore des éléments optiques (non représentés), dans cet espace avant 265 en conservant un halo lumineux diffusant autour de ceux-ci.

Pour renforcer cet aspect esthétique très intéressant, les portions de découplage de ces deux guides de lumière 201 et 201' sont agencées de manière à former ensemble une unique concavité tournée vers la glace de fermeture 264.

Pour cacher, la fixation entre le fût 227 et le tenon 227', il est possible de placer un occulteur avec une partie d'occultation 230 en avant de ce fût 227 et de ce tenon 227'. Selon l'exemple de réalisation illustré, cet occulteur présente un passage 231, tel qu'un trou traversant ou une encoche, à travers lequel le tenon 227' est relié à la portion de découplage de la partie secondaire de guidage 220' du deuxième guide de lumière 201'. En arrière de ce passage, l'occulteur présente une oreille 232 dont le trou traversant est traversé par la vis de fixation 234, et enserré entre le fût 227 du premier guide de lumière et la tête de la vis 234.

De manière générale et au-delà de l'exemple illustré, la patte de fixation du premier guide de lumière, son support et l'occulteur se fixent selon un empilement linéaire, notamment en comprenant chacun un orifice, leurs orifices étant traversés par un unique moyen de fixation, tel qu'une vis.

Selon un exemple de réalisation, chaque partie secondaire de guidage 220, 220' de ces guides de lumière 201, 201' présente une branche 226, 226' entre la portion de découplage correspondante et respectivement le fût de fixation 227 et le tenon de fixation 227'. Le passage d'une de ces portions de découplage à la branche 226, 226' correspondante forme un décrochement 225, 225'. Les rayons R₂ guidés par les deuxième parties de guidages 220, 220' jusqu'à ces décrochements 225, 225' ou jusqu'à ces branches correspondantes 226, 226' vont être susceptibles de sortir du guide de lumière 201, 201'. En l'absence d'occulteur, non seulement ils risquent de sortir de manière non contrôlée, mais encore sortant par la tranche, ils risquent de créer un spot lumineux indésirable. L'occulteur précédemment décrit permet d'occulter ces rayons R₂.

En particulier, dans l'agencement illustré en figures 4 et 5, la partie d'occultation 230 présente une face verticale et une face horizontale permettant d'occulter les rayons indésirables.

Dans le mode de réalisation illustré en figures 4 et 5, la majorité des rayons lumineux entrant dans les guides de lumières 201 et 201' sortent par leurs dioptres de sortie 218 et 218', situés à l'extrémité de leurs portions aval 217, 217'. Dans cet exemple, ceux-ci vont permettre la génération d'un faisceau de feu de signalisation, en particulier permettre de respecter la répartition et l'intensité lumineuse, encore appelée photométrie, d'un faisceau de signalisation, notamment un feu stop, ou encore d'un feu stop pour le premier guide 201 et d'un feu de recul pour le deuxième guide 201'.

Ces dioptres de sortie 218 et 218' peuvent également comprendre des billages pour disperser les rayons lumineux autour d'une direction globale d'émission du faisceau et ainsi élargir celui-ci.

Pour des raisons esthétiques, les portions avals 217, 217' des parties principales de guidages 210, 210' sont recouvertes d'un masque 240, 240'. Ce dernier est en forme d'un manchon, emmanché sur la portion aval correspondante 227, 227'.

Ce masque présente un décrochement 242, 242', apte à venir en butée contre le rétrécissement formant la portion de réflexion 216, 216'. Dans cet exemple, les portions de réflexion 216, 216' étant des pans inclinés, les décrochements des masques 242, 242', sont également des pans inclinés. Cela permet de créer une limite à l'emmanchement de ces masques 240, 240' et de les positionner. En figure 5, seul le masque 240' du deuxième guide de lumière 201' est emmanché jusqu'au bout.

Les portions aval 217, 217' dépassent de ces manchons. Cela n'est pas nécessaire du moment que leurs faisceaux lumineux peuvent en sortir mais c'est plus simple à réaliser.

Les côtés de ces masques 240, 240', orientés vers le centre de l'espace avant 265, à savoir dans cet exemple, le côté supérieur du masque 240 du premier guide de lumière 201 et le côté inférieur du masque 240' du deuxième guide de lumière 201', vont pouvoir être éclairés par le halo lumineux. Pour renforcer l'effet diffus du halo, il est possible d'agencer ces côtés de manière à les rendre réfléchissants, par exemple en les aluminant, ou à les rendre diffusants.

Selon un mode de réalisation, le masque 240' du deuxième guide comprend une partie, supérieure dans cet exemple de réalisation, qui couvre également la portion amont 214' de la partie principale de guidage 210'. Ce masque 240' ne couvre que la face supérieure de la portion amont 214' mais pas la face opposée, ici la face inférieure, de la portion amont 214' pour permettre un emmanchement facile de ce masque 240' sur la portion aval du deuxième guide 201'. Il est cependant possible d'utiliser un masque supplémentaire 270, pour masquer cette face opposée. Ce masque supplémentaire 270 est notamment distinct du masque 240' et rapporté sur la portion aval 214' du deuxième guide de lumière 201'.

Le masque 240' peut comprendre une ouverture 244' et la portion amont 214' peut comprendre des moyens de découplage, tel que des prismes et/ou des stries (non représentés), en vis-à-vis de cette ouverture 244'. Ces moyens de découplage sont agencés pour découpler une autre partie des rayons lumineux guidés dans la portion amont 214' de la partie principale de guidage 210', de manière à ce qu'ils sortent par cette ouverture 244'. Ainsi, un halo lumineux supplémentaire va être créé dans l'enveloppe 261 du dispositif lumineux de véhicule 260.

Dans l'exemple illustré de la figure 5, ce halo lumineux supplémentaire rayonne entre le deuxième guide de lumière 201' et la paroi supérieure du boitier 262.

Les sources de lumière peuvent être des diodes électroluminescentes 251, 254, encore appelées DEL ou bien LED. Elles sont agencées en vis-à-vis des dioptres d'entrée 212, 212' des guides de lumière 201 et 201'. Elles sont portées par des cartes électroniques 252, 255, notamment reliées à une alimentation électrique via des connecteurs 253, 256.

Les dioptres d'entrés 212, 212' peuvent être agencés de manière à diminuer l'angle d'ouverture du faisceau de rayons lumineux les traversant. Par exemple, ils peuvent former un collimateur. Par exemple, ils peuvent présenter des portions paraboliques dont le foyer passe par l'élément photoémissif de la LED 251, 254 correspondantes.

## Revendications

1. Dispositif lumineux de véhicule automobile (260) comprenant un guide de lumière (1 ; 101 ; 201, 201') comprenant :
- une partie principale de guidage (10 ; 110 ; 210 ; 210') de lumière comprenant une portion amont (14, 114) délimitée par un dioptre d'entrée (12 ; 112 ; 212 ; 212') destiné à recevoir des rayons de lumière d'une source lumineuse et une portion aval (17, 117) délimité par un dioptre de sortie principal (18 ; 118 ; 218 ; 218'), la partie principale de guidage étant agencée de manière à ce qu'une première partie des rayons de lumière (R₁ ; R₁₀ ; R'₁) traversant le dioptre d'entrée soit guidée jusqu'au dioptre de sortie principal,
- une partie secondaire de guidage (20 ; 120 ; 220 ; 220') de lumière jointe à ladite partie principale de guidage (10 ; 110 ; 210 ; 210') en une zone de jonction (22 ; 122 ; 222 ; 222'),
dans lequel ladite partie secondaire de guidage (20 ; 120 ; 220 ; 220') s'étend du côté de la portion amont (14, 114) de la partie principale de guidage (10 ; 110 ; 210 ; 210'), **caractérisé en ce que** la partie principale de guidage (10 ; 110 ; 210 ; 210') et ladite partie secondaire de guidage (20 ; 120 ; 220 ; 220') sont agencées de manière à ce qu'une deuxième partie des rayons lumineux (R₂ ; R₂₀ ; R₃) traversant le dioptre d'entrée soient réfléchis à l'intérieur de ladite partie secondaire de guidage (20 ; 120 ; 220 ; 220'), et dans lequel ladite partie principale de guidage (10 ; 110 ; 210 ; 210') comprend une portion de réflexion (16 ; 116 ; 216 ; 216') apte à réfléchir ladite deuxième partie des rayons de lumière (R₂ ; R₂₀ ; R₃) vers et jusqu'à l'intérieur de ladite partie secondaire de guidage (20 ; 120 ; 220 ; 220').

2. Dispositif lumineux de véhicule selon la revendication 1, dans lequel la partie secondaire de guidage (20 ; 120 ; 220 ; 220') s'étend du côté de la portion amont (14, 114) à partir et dès la zone de jonction (22 ; 122 ; 222 ; 222').

3. Dispositif lumineux de véhicule selon la revendication 1 ou 2, dans lequel ladite portion de réflexion (16 ; 116 ; 216 ; 216') forme un rétrécissement de la partie principale de guidage (10 ; 110 ; 210 ; 210') de sorte qu'elle intercepte une partie des rayons lumineux (R₂, R₂₀) provenant du dioptre d'entrée (12 ; 112 ; 212 ; 212').

4. Dispositif lumineux de véhicule selon l'une quelconque des revendications précédentes, dans lequel ladite portion de réflexion (16 ; 116 ; 216 ; 216') est formée par un pan incliné.

5. Dispositif lumineux de véhicule selon l'une quelconque des revendications précédentes, dans lequel ladite portion de réflexion (16 ; 116 ; 216 ; 216') est en vis-à-vis de ladite zone de jonction (22 ; 122 ; 222 ; 222').

6. Dispositif lumineux de véhicule selon l'une quelconque des revendications précédentes, dans lequel ladite partie secondaire de guidage (20 ; 220 ; 220') est courbée et est, vu de l'extérieur du guide (1 ; 201 ; 201'), concave à l'avant.

7. Dispositif lumineux de véhicule selon l'une quelconque des revendications précédentes, dans lequel ladite partie secondaire de guidage (20 ; 120 ; 220 ; 220') comprend des moyens de découplage (200 ; 200') répartis le long de cette partie secondaire de découplage de manière à ce que des rayons (R3) s'échappent le long de celle-ci.

8. Dispositif lumineux de véhicule (260) selon l'une quelconque des revendications précédentes, comprenant une source de lumière (251, 254), ladite source de lumière étant agencée de manière à émettre des rayons lumineux au travers dudit dioptre d'entrée (212, 212').

9. Dispositif lumineux de véhicule (260) selon l'une quelconque des revendications précédentes, dans lequel la première partie de rayons de lumière (R₁ ; R'₁) forme en sortant du dioptre de sortie principal (218; 218') une partie ou la totalité d'une fonction de signalisation et/ou d'éclairage de la route, notamment d'un feu stop, d'un indicateur de direction et/ou d'un feu de recul.

10. Dispositif lumineux de véhicule (260) selon l'une quelconque des revendications précédentes, comprenant une enveloppe (261) formée par un boîtier (262) et par une glace de fermeture (264) du boîtier, ladite partie secondaire de guidage (220, 220') comprenant des moyens de découplage (200, 200') répartis le long de cette partie secondaire de découplage de manière à ce que des rayons (R₃) s'échappent le long de celle-ci, ces rayons formant un halo d'illumination de l'intérieur de ladite enveloppe.

11. Dispositif lumineux de véhicule selon l'une quelconque des revendications précédentes, comprenant un masque (240, 240', 270) recouvrant une partie de la partie principale de guidage (210 ; 210').

12. Dispositif lumineux de véhicule selon l'une quelconque des revendications précédentes, dans lequel ladite portion de réflexion (216 ; 216') est agencée de manière à ce que sa surface externe forme une butée sur laquelle ledit masque (240, 240') est positionné.

13. Dispositif lumineux de véhicule selon la revendication 11 ou 12, dans lequel ledit masque (240, 240') est un manchon dans lequel la partie principale de guidage (210 ; 210') est emmanchée.

14. Dispositif lumineux de véhicule selon la revendication 8, dans lequel ladite source de lumière (251, 254) est une diode électroluminescente.

## Patentansprüche

1. Kraftfahrzeugleuchtvorrichtung (260), umfassend einen Lichtwellenleiter (1; 101; 201; 201'), umfassend:
- einen Haupt-Lichtwellenleitungsteil (10; 110; 210; 210'), umfassend einen stromaufwärtigen Abschnitt (14, 114), welcher von einem Eingangsdiopter (12; 112; 212; 212') begrenzt wird, der dazu bestimmt ist, Lichtstrahlen von einer Lichtquelle zu empfangen, und einen stromabwärtigen Abschnitt (17, 117), der von einem Hauptausgangsdiopter (18; 118; 218; 218') begrenzt wird, wobei der Hauptleitungsteil derart angeordnet ist, dass ein erster Teil der Lichtstrahlen (R₁; R₁₀; R'₁), der den Eingangsdiopter durchquert, bis zum Hauptausgangsdiopter geleitet wird,
- einen sekundären Lichtwellenleitungsteil (20; 120; 220; 220'), der mit dem Hauptleitungsteil (10; 110; 210; 210') in einer Verbindungszone (22; 122; 222; 222') verbunden ist,
wobei sich der sekundäre Leitungsteil (20; 120; 220; 220') von der Seite des stromaufwärtigen Abschnitts (14, 114) des Hauptleitungsteils (10; 110; 210; 210') erstreckt,
**dadurch gekennzeichnet, dass** der Hauptleitungsteil (10; 110; 210; 210') und der sekundäre Leitungsteil (20; 120; 220; 220') derart angeordnet sind, dass ein zweiter Teil der Lichtstrahlen (R₂; R₂₀; R₃), der den Eingangsdiopter durchquert, Im Inneren des sekundären Leitungsteils (20; 120; 220; 220') reflektiert werden, und wobei der Hauptleitungsteil (10; 110; 210; 210') einen Reflexionsabschnitt (16; 116; 216; 216') umfasst, der geeignet ist, den zweiten Teil der Lichtstrahlen (R₂; R₂₀; R₃) zum und bis zum Inneren des sekundären Leitungsteils (20; 120; 220; 220') zu reflektieren.

2. Fahrzeugleuchtvorrichtung nach Anspruch 1, wobei sich der sekundäre Leitungsteil (20; 120; 220; 220') von der Seite des stromaufwärtigen Abschnitts (14, 114) aus und von der Verbindungszone (22; 122; 222; 222') erstreckt.

3. Fahrzeugleuchtvorrichtung nach Anspruch 1 oder 2, wobei der Reflexionsabschnitt (16; 116; 216; 216') eine Verengung des Hauptleitungsteils (10; 110; 210; 210') derart bildet, dass er einen Teil der Lichtstrahlen (R₂; R₂₀) schneidet, der vom Eingangsdiopter (12; 112; 212; 212') kommt.

4. Fahrzeugleuchtvorrichtung nach einem der vorhergehenden Ansprüche, wobei der Reflexionsabschnitt (16; 116; 216; 216') durch eine geneigte Fläche gebildet ist.

5. Fahrzeugleuchtvorrichtung nach einem der vorhergehenden Ansprüche, wobei der Reflexionsabschnitt (16; 116; 216; 216') gegenüber der Verbindungszone (22; 122; 222; 222') liegt.

6. Fahrzeugleuchtvorrichtung nach einem der vorhergehenden Ansprüche, wobei der sekundäre Leitungsteil (20; 220; 220') gekrümmt ist und, von außerhalb des Leiters (1; 201; 201') gesehen, vorne konkav ist.

7. Fahrzeugleuchtvorrichtung nach einem der vorhergehenden Ansprüche, wobei der sekundäre Leitungsteil (20; 120; 220; 220') Entkopplungsmittel (200; 200') umfasst, die entlang dieses sekundären Entkopplungsteils derart verteilt sind, dass die Strahlen (R₃) entlang desselben austreten.

8. Fahrzeugleuchtvorrichtung (260) nach einem der vorhergehenden Ansprüche, umfassend eine Lichtquelle (251, 254), wobei die Lichtquelle derart angeordnet ist, dass sie Lichtstrahlen quer durch den Eingangsdiopter (212, 212') emittiert.

9. Fahrzeugleuchtvorrichtung (260) nach einem der vorhergehenden Ansprüche, wobei der erste Teil der Lichtstrahlen (R₁; R'₁) beim Austritt aus dem Hauptausgangsdiopter (218; 218') einen Teil einer oder die Gesamtheit einer Funktion zur Signalisierung und/oder Beleuchtung der Fahrbahn bildet, insbesondere einer Bremsleuchte, eines Richtungsanzeigers und/oder eines Rücklichts.

10. Fahrzeugleuchtvorrichtung (260) nach einem der vorhergehenden Ansprüche, umfassend eine Hülle (261), die durch ein Gehäuse (262) und ein Verschlussglas (264) des Gehäuses gebildet wird, wobei der sekundäre Leitungsteil (220, 220') Entkopplungsmittel (200, 200') umfasst, die entlang dieses sekundären Entkopplungsteils derart verteilt sind, dass die Strahlen (R₃) entlang desselben austreten, wobei diese Strahlen einen Beleuchtungshalo des Inneren der Hülle bilden.

11. Fahrzeugleuchtvorrichtung nach einem der vorhergehenden Ansprüche, umfassend eine Maske (240, 240', 270), die einen Teil des Hauptleitungsteils (210; 210') abdeckt.

12. Fahrzeugleuchtvorrichtung nach einem der vorhergehenden Ansprüche, wobei der Reflexionsabschnitt (216; 216') derart angeordnet ist, dass seine Außenfläche einen Anschlag bildet, an dem die Maske (240, 240') positioniert ist.

13. Fahrzeugleuchtvorrichtung nach Anspruch 11 oder 12, wobei die Maske (240, 240') eine Manschette ist, in welcher der Hauptleitungsteil (210; 210') eingesteckt ist.

14. Fahrzeugleuchtvorrichtung nach Anspruch 8, wobei die Lichtquelle (251, 254) eine Elektrolumineszenzdiode ist.

## Claims

1. Motor vehicle light device (260) comprising a light guide (1; 101; 201, 201') comprising:
- a main light-guiding part (10; 110; 210; 210') comprising an upstream portion (14, 114) delimited by an input dioptre (12; 112; 212; 212') intended to receive light rays from a light source and a downstream portion (17, 117) delimited by a main output dioptre (18; 118; 218; 218'), the main guiding part being arranged in such a way that a first part of the light rays (R₁; R₁₀; R'₁) passing through the input dioptre is guided to the main output dioptre,
- a secondary light-guiding part (20; 120; 220; 220') joined to said main guiding part (10; 110; 210; 210') in a junction zone (22; 122; 222; 222'),
in which said secondary guiding part (20; 120; 220; 220') extends on the side of the upstream portion (14, 114) of the main guiding part (10; 110; 210; 210'), **characterized in that**
the main guiding part (10; 110; 210; 210') and said secondary guiding part (20; 120; 220; 220') are arranged in such a way that a second part of the light rays (R₂; R₂₀; R₃) passing through the input dioptre are reflected inside said secondary guiding part (20; 120; 220; 220'), and in which said main guiding part (10; 110; 210; 210') comprises a reflection portion (16; 116; 216; 216') capable of reflecting said second part of the light rays (R₂; R₂₀; R₃) towards and to the interior of said secondary guiding part (20; 120; 220; 220').

2. Vehicle light device according to Claim 1, in which the secondary guiding part (20; 120; 220; 220') extends on the side of the upstream portion (14, 114) from and starting at the junction zone (22; 122; 222; 222').

3. Vehicle light device according to Claim 1 or 2, in which said reflection portion (16; 116; 216; 216') forms a narrowing of the main guiding part (10; 110; 210; 210') such that it intercepts a part of the light rays (R₂, R₂₀) originating from the input dioptre (12; 112; 212; 212').

4. Vehicle light device according to any one of the preceding claims, in which said reflection portion (16; 116; 216; 216') is formed by an inclined flap.

5. Vehicle light device according to any one of the preceding claims, in which said reflection portion (16; 116; 216; 216') is facing said junction zone (22; 122; 222; 222').

6. Vehicle light device according to any one of the preceding claims, in which said secondary guiding part (20; 220; 220') is curved and is, when seen from the outside of the guide (1; 201; 201'), concave to the front.

7. Vehicle light device according to any one of the preceding claims, in which said secondary guiding part (20; 120; 220; 220') comprises decoupling means (200; 200') distributed along this secondary decoupling part in such a way that rays (R3) escape along the latter.

8. Vehicle light device (260) according to any one of the preceding claims, comprising a light source (251, 254), said light source being arranged in such a way as to emit light rays through said input dioptre (212, 212').

9. Vehicle light device (260) according to any one of the preceding claims, in which the first part of light rays (R₁; R'₁) forms, on leaving the main output dioptre (218; 218'), a part or all of a signalling and/or road lighting function, in particular a stop light, a direction indicator and/or a reversing light.

10. Vehicle light device (260) according to any one of the preceding claims, comprising an enclosure (261) formed by a housing (262) and by an outer lens (264) closing the housing, said secondary guiding part (220, 220') comprising decoupling means (200, 200') distributed along this secondary decoupling part in such a way that rays (R₃) escape along the latter, these rays forming a halo illuminating the interior of said enclosure.

11. Vehicle light device according to any one of the preceding claims, comprising a mask (240, 240', 270) covering a part of the main guiding part (210; 210').

12. Vehicle light device according to any one of the preceding claims, in which said reflection portion (216; 216') is arranged in such a way that its outer surface forms an abutment on which said mask (240, 240') is positioned.

13. Vehicle light device according to Claim 11 or 12, in which said mask (240, 240') is a sleeve in which the main guiding part (210; 210') is fitted.

14. Vehicle light device according to Claim 8, in which said light source (251, 254) is a light-emitting diode.
